# FASCICULE DE BREVET EUROPEEN

(11) **EP 2 497 936 B1**
(45) Date de publication et mention de la délivrance du brevet: **18.09.2013**
(21) Numéro de dépôt: 12155793.8
(22) Date de dépôt: 16.02.2012
(51) Int. Cl.: F02M 35/10, B01D 35/00

(54) **Conduit d'admission d'air multifonction pour moteur diesel**
Multifunkionsansaugleitung für einen Dieselmotor
Multifunctional suciton pipr for a diesel engine

(30) Priorité: 09.03.2011 FR 1151930
(43) Date de publication de la demande: 12.09.2012
(73) Titulaire: Peugeot Citroën Automobiles SA, 78140 Vélizy Villacoublay (FR)
(72) Inventeur: Massieux, Michael, 51000 Chalons en Champagne (FR); Chemin, Philippe, 78400 Chatou (FR); Azou, Yvon, 94130 Nogent sur Marne (FR)

(56) Documents cités:
- EP-A1- 0 484 710
- DE-A1-102006 011 210
- JP-A- 7 279 791

## Description

La présente invention concerne un conduit d'admission d'air multifonction pour un moteur Diesel, équipé d'une ligne d'admission d'air et d'un système de filtration du carburant. Elle concerne plus particulièrement un conduit d'admission d'air d'un moteur Diesel, dans lequel les contraintes dites de protection en cas de choc sont importantes. Elle concerne enfin un véhicule, en particulier un véhicule automobile, à motorisation Diesel, équipé d'un tel conduit d'admission d'air multifonction.

On a déjà cherché à réduire le nombre de pièces d'un ensemble comprenant, notamment, un organe et filtration de carburant et un collecteur d'admission.

Ainsi, à titre d'exemple, le document JP 7279791 A décrit une cartouche de filtre, constituée par un élément filtrant disposé dans un carter de filtre, qui est fixée, de manière amovible, au côté inférieur d'un support en arc-boutant auquel est fixé le carter de filtre prévu sur le tuyau d'huile principal d'un collecteur d'admission. Le support en arc-boutant est réalisé « monobloc » avec le collecteur d'admission par moulage sous pression d'aluminium. La face inférieure du support est concave vers le haut, et un cylindre de sortie, dans lequel est pratiqué un canal de sortie de carburant, est positionné comme suspendu à partir de la face inférieure du support, dans la partie sensiblement centrale de ladite face inférieure. La surface périphérique de cette face inférieure concave sert de chambre d'entrée du carburant, lequel carburant entre dans cette chambre d'entrée par un canal d'entrée de carburant. Le corps de liaison du carter de filtre est monté par vissage sur la surface périphérique externe filetée du cylindre de sortie.

Toutefois, bien que le filtre soit intégré au circuit d'admission, d'autres fonctions, telles que, notamment, la protection anti-collision et la récupération de fuites éventuelles de carburant restent des fonctions séparées, assurées par des moyens distincts qui occupent de l'espace, nécessitent des fixations inter pièces, et des jeux d'assemblage précis.

Le but de la présente invention est de fournir un conduit d'admission d'air multifonction, qui intègre différentes fonctions, telles que, notamment, une fonction de support du filtre à gasoil et une fonction de protection en cas de choc, et permette, ainsi, de réduire l'encombrement, la masse et le nombre de pièces dans la zone dudit conduit d'admission.

Un autre but de la présente invention est de fournir un tel conduit d'admission d'air multifonction, qui présente, de surcroît, une fonction de récupération de fuite éventuelle de carburant au niveau du filtre à gasoil.

Enfin, c'est également un but de la présente invention de fournir un tel conduit d'admission d'air multifonction, qui soit de conception et de montage simples, et par conséquent, économique.

Pour parvenir à ces buts, la présente invention a pour objet un conduit d'admission d'air multifonction pour un moteur Diesel d'un véhicule équipé d'une ligne d'admission d'air proche du système de filtration du carburant, et ce nouveau conduit d'admission d'air multifonction est constitué, d'une part, par une tubulure, sensiblement cylindrique, qui présente une entrée d'air en provenance du turbocompresseur et une sortie d'air sur la culasse du moteur, ladite tubulure s'étendant selon un axe curviligne pour être sensiblement repliée sur elle-même, et, d'autre part, une paroi de protection, sensiblement verticale, en saillie de la surface externe supérieure de la tubulure, qui assure une fonction de support et de protection anti-choc du filtre à carburant.

De manière avantageuse, la surface externe supérieure de la tubulure forme, en coopération avec une paroi de fond sensiblement horizontale, une goulotte permettant de canaliser les fuites éventuelles susceptibles d'apparaître en partie haute du filtre à carburant.

La tubulure peut comporter une entrée de gaz d'échappement redirigés ou gaz « EGR ».

La paroi de protection du filtre à carburant peut avantageusement présenter une forme en secteur cylindrique, qui épouse sensiblement la surface périphérique externe du filtre à carburant.

Cette paroi de protection peut comporter, à sa partie supérieure, deux trous taraudés destinés à recevoir des vis de fixation du filtre à carburant.

Il peut être, de plus, prévu un troisième trou taraudé sur une extension radiale de la sortie d'air de la tubulure.

Selon le mode préféré de réalisation de l'invention, la paroi de protection est conçue « monobloc » avec la tubulure, la paroi de protection et la tubulure étant, de préférence, réalisées en aluminium par exemple, ensemble par une même opération de fonderie.

La présente invention a aussi pour objet un véhicule, en particulier un véhicule automobile, à motorisation Diesel, qui comporte un conduit d'admission d'air pour l'alimentation en air du moteur conforme au conduit d'admission air multifonction décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en perspective, schématique, du conduit d'air multifonction selon l'invention, supportant le filtre à gasoil,
- la figure 2 est une vue en perspective, schématique, du conduit d'air multifonction de la figure 1, seul, non monté sur le filtre à gasoil, et
- la figure 3 est une vue en perspective, schématique, de l'ensemble formé par le conduit d'air multifonction et le filtre à gasoil de la figure 1, selon un autre angle de vue.

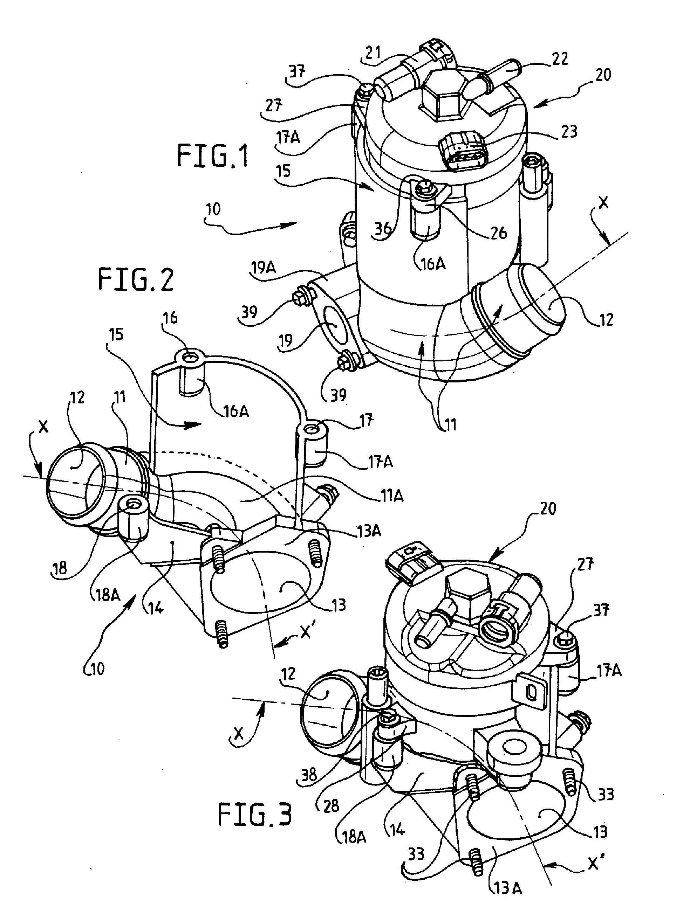

En référence au dessin de la figure 1, on a représenté un conduit d'admission d'air multifonction selon la présente invention, de référence générale 10, qui supporte un filtre à gasoil, de référence générale 20, avec son arrivée de carburant 21, sa sortie de carburant 22 et son connecteur électrique de réchauffeur de gasoil 23.

Selon le principe de l'invention, le conduit d'air multifonction 10 intègre les différentes fonctions suivantes :
- a) une fonction de conduit de circulation d'air, assurée par la pièce tubulaire 11,
- b) la fonction de récupération des gaz « EGR » (acronyme de « Exhaust Gas Recirculation »), qui sont des gaz d'échappement du moteur à combustion interne redirigés dans le conduit ou collecteur d'admission par l'entrée 19,
- c) la fonction de support de filtre à gasoil, assurée notamment par des vis de fixation 36, 37 et 38 du filtre sur le conduit multifonction,
- d) la fonction de protection anti-choc du filtre à gasoil, assurée, notamment mais non exclusivement, par la paroi de protection 15, laquelle est sensiblement verticale, en saillie de la surface externe supérieure de la tubulure 11, et
- e) la fonction de récupération de fuites éventuelles du carburant dans la partie haute du filtre 20.

### A. La fonction de conduit de circulation d'air.

La tubulure 11 est sensiblement cylindrique et présente une entrée 12 de l'air en provenance du turbocompresseur de suralimentation (non représenté) et une sortie d'air 13 (mieux représentée sur les figures 2 et 3) connectée à la culasse du moteur, à laquelle la tubulure 11 est fixée par la semelle 13A de sortie d'air et les trois vis d'assemblage référencés collectivement 33 (figure 3).

La tubulure 11 se développe selon un axe curviligne XX', de façon à être sensiblement repliée sur elle-même et former une sorte de coude relativement compact.

### B. La fonction de récupération des gaz « EGR »

Elle est assurée par le tronçon tubulaire 19A débouchant sur l'entrée 19 des gaz EGR déjà mentionnée, qui permet à ses derniers d'entrer dans la tubulure 11 et se mélanger à l'air en provenance du système de suralimentation par turbocompresseur.

Deux vis de fixation, référencées collectivement 39, permettent de raccorder le tronçon 19 du conduit multifonction de l'invention au conduit d'amenée des gaz EGR.

### C. La fonction de support du filtre à gasoil.

Des moyens de fixation sont prévus pour fixer le filtre à gasoil 10 sur le conduit multifonction 20. Ils comprennent les moyens suivants :
- deux trous taraudés 16 et 17, réalisés dans deux petits cylindres 16A et 17A, respectivement, en extension de la surface externe de la paroi de protection 15 et à la partie supérieure de celle-ci, lesquels trous étant destinés à recevoir deux vis de fixation 36 et 37, respectivement, et
- un trou taraudé 18, réalisé dans un petit cylindre 18A placé à l'extrémité d'une extension 14 de la semelle 13A de sortie d'air, lequel trou est destiné à recevoir une vis de fixation 38 du filtre à carburant 20.

Les vis de fixation 36, 37 et 38 du filtre à gasoil 20 sur le conduit multifonction 10 sont montées sur des pattes de fixation 26, 27 et 28, respectivement, en extension de la surface périphérique du filtre 20.

### D. La fonction de protection anti-choc du filtre à gasoil.

La forme cylindrique de la tubulure a pour conséquence une grande résistance mécanique en cas de choc. Ce point est essentiel. En effet, si le filtre à gasoil 20, en cas de choc, est percé en partie basse, la fuite de carburant peut être très importante et, dans ce cas, le véhicule peut être considéré comme ne respectant pas les réglementations « anti-choc », lesquelles imposent qu'en cas de choc, aucune fuite de gasoil ne doit tomber sur la route.

La forme de la paroi de protection 15 en secteur de cylindre, qui épouse la surface périphérique externe du filtre 20, participe également à la résistance en cas de choc.

La fonction de protection du filtre à gasoil est également assumée par la réalisation « monobloc » du conduit multifonction. La tubulure et la paroi de protection sont réalisées en aluminium, par exemple, au cours de la même opération de fonderie. La protection anti-choc du filtre à gasoil est ainsi intégrée dans la fonderie du conduit.

En cas d'accident, la paroi de protection encaisse le choc. Dans un cas extrême, il peut arriver que la paroi s'affaisse vers le filtre et blesse le plastique du filtre. Si une fuite apparaît en partie haute du filtre, elle est alors canalisée et récupérée dans la partie basse de ce dernier.

### E. La fonction de récupération de fuites.

La fonction de récupération de fuites éventuelles du carburant qui pourraient apparaître dans la partie haute du filtre 20 est assurée par la surface externe supérieure 11 A (figure 2) de la tubulure 11, qui forme une sorte de goulotte de récupération du carburant prolongée par une paroi de fond sensiblement horizontale à la base du conduit.

### Conclusions

Contrairement aux ensembles de pièces distinctes qui remplissent les fonctions exposées ci-dessus, le conduit d'admission d'air multifonction décrit ci-dessus intègre toutes ces fonctions, qui ne sont alors plus séparées. Cette intégration permet de réduire l'encombrement, et de récupérer les fuites éventuelles en cas de choc, comme mentionné ci-dessus.

Le conduit d'admission d'air multifonction décrit ci-dessus présente d'autres avantages que ceux déjà mentionnés précédemment, en particulier les avantages suivants :
- Il permet de diminuer le nombre de fixations par rapport aux solutions de pièces séparées assumant toutes les fonctions du conduit de l'invention,
- il supprime les problèmes liés aux jeux d'assemblage entre les pièces formant les ensembles, connus de l'art antérieur, avantageusement remplacés par le conduit multifonction de l'invention,
- il permet un gain de temps au montage,
- il supprime le découplage thermique sur le tube EGR et,
- il permet un gain de masse sur l'ensemble des fonctions assumées par le conduit multifonction de l'invention, et décrites ci-dessus en détail.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Conduit d'admission d'air multifonction pour un moteur Diesel de véhicule équipé d'une ligne d'admission d'air proche du système de filtration du carburant, **caractérisé en ce qu'**il est constitué, d'une part, par une tubulure (11), sensiblement cylindrique, qui présente une entrée d'air (12) en provenance du turbocompresseur et une sortie d'air (13) sur la culasse du moteur, ladite tubulure (11) s'étendant selon un axe curviligne (« X ») pour être sensiblement repliée sur elle-même, et, d'autre part, une paroi de protection (15), sensiblement verticale, en saillie de la surface externe supérieure de la tubulure (11), qui assure une fonction de support et de protection anti-choc du filtre à carburant (20).

2. Conduit d'admission d'air multifonction selon la revendication 1, **caractérisé en ce que** la surface externe supérieure (11 A) de la tubulure (11) forme, en coopération avec une paroi de fond sensiblement horizontale, une goulotte permettant de canaliser et récupérer les fuites éventuelles susceptibles d'apparaître en partie haute du filtre à carburant (20).

3. Conduit d'admission d'air multifonction selon l'une quelconque des revendications 1 et 2, **caractérisé en ce que** ladite tubulure (11) comporte une entrée de gaz d'échappement redirigés (19) ou gaz « EGR ».

4. Conduit d'admission d'air multifonction selon la revendication 1, caractérisé en ce ladite paroi de protection (15) du filtre à carburant (20) présente une forme en secteur cylindrique, qui épouse sensiblement la surface périphérique externe du filtre à carburant (20).

5. Conduit d'admission d'air multifonction selon l'une quelconque des revendications 1 et 4, **caractérisé en ce que** la paroi de protection (15) comporte, à sa partie supérieure, deux trous taraudés (16, 17) destinés à recevoir des vis de fixation (36, 37) du filtre à carburant (20).

6. Conduit d'admission d'air multifonction selon la revendication 5, **caractérisé en ce qu'**il est prévu un troisième trou taraudé (18) sur une extension radiale (14) de la sortie d'air (13) de la tubulure (11).

7. Conduit d'admission d'air multifonction selon l'une quelconque des revendications 1 à 8, **caractérisé en ce que** la paroi de protection (15) est « monobloc » avec la tubulure (11).

8. Conduit d'admission d'air multifonction selon la revendication 7, **caractérisé en ce que** la paroi de protection (15) et la tubulure (11) sont réalisées en métal, par une même opération de fonderie.

9. Conduit d'admission d'air multifonction selon la revendication 8, **caractérisé en ce que** ledit métal est l'aluminium.

10. Véhicule, en particulier véhicule automobile, à motorisation Diesel, **caractérisé en ce qu'**il comporte un conduit d'admission d'air pour l'alimentation en air suralimenté du moteur conforme au conduit d'admission air multifonction de l'une quelconque des revendications précédentes.

## Patentansprüche

1. Multifunktionsansaugleitung für einen Fahrzeugdieselmotor, der mit einer Luftansaugleitung nahe dem Kraftstofffiltersystem ausgestattet ist, **dadurch gekennzeichnet, dass** sie einerseits aus einem Stutzen (11), der im Wesentlichen zylindrisch ist, besteht, der einen Einlass (12) von Luft, die von dem Turboverdichter kommt, und einen Luftauslass (13) auf dem Zylinderkopf des Motors aufweist, wobei sich der Stutzen (11) entlang einer gekrümmten Achse ("X") erstreckt, um im Wesentlichen auf sich selbst zurückgefaltet zu sein, und, andererseits, eine Schutzwand (15), die im Wesentlichen vertikal ist, die von der äußeren oberen Oberfläche des Stutzens (11) vorsteht, die eine Trag- und Stoßschutzfunktion des Kraftstofffilters (20) sicherstellt.

2. Multifunktionsansaugleitung nach Anspruch 1, **dadurch gekennzeichnet, dass** die äußere obere Oberfläche (11A) des Stutzens (11) zusammenwirkend mit einer Bodenwand, die im Wesentlichen horizontal ist, eine Rinne bildet, die es erlaubt, eventuelle Lecks, die am oberen Teil des Kraftstofffilters (20) auftreten können, zu kanalisieren und aufzufangen.

3. Multifunktionsansaugleitung nach einem der Ansprüche 1 und 2, **dadurch gekennzeichnet, dass** der Stutzen (11) einen Eingang für umgelenkte Abgase (19) oder "EGR"-Gase aufweist.

4. Multifunktionsansaugleitung nach Anspruch 1, **dadurch gekennzeichnet, dass** die Schutzwand (15) des Kraftstofffilters (20) eine Forum in zylindrischem Querschnitt bildet, die sich im Wesentlichen an die äußere Umfangsfläche des Kraftstofffilters (20) legt.

5. Multifunktionsansaugleitung nach einem der Ansprüche 1 und 4, **dadurch gekennzeichnet, dass** die Schutzwand (15) an ihrem oberen Teil zwei Gewindelöcher (16, 17) aufweist, die dazu bestimmt sind, Befestigungsschrauben (36, 37) des Kraftstofffilters (20) aufzunehmen.

6. Multifunktionsansaugleitung nach Anspruch 5, **dadurch gekennzeichnet, dass** ein drittes Gewindeloch (18) auf einer radialen Erweiterung (14) des Luftauslasses (13) des Stutzens (11) vorgesehen ist.

7. Multifunktionsansaugleitung nach einem der Ansprüche 1 bis 8, **dadurch gekennzeichnet, dass** die Schutzwand (15) mit dem Stutzen (11) einteilig ist.

8. Multifunktionsansaugleitung nach Anspruch 7, **dadurch gekennzeichnet, dass** die Schutzwand (15) und der Stutzen (11) durch ein und denselben Gießereivorgang aus Metall hergestellt sind.

9. Multifunktionsansaugleitung nach Anspruch 8, **dadurch gekennzeichnet, dass** das Metall das Aluminium ist.

10. Fahrzeug, insbesondere Kraftfahrzeug, mit Dieselmotor, **dadurch gekennzeichnet, dass** es eine Ansaugleitung zur Versorgung mit aufgeladener Luft des Motors gemäß der Multifunktionsansaugleitung nach einem der vorhergehenden Ansprüche aufweist.

## Claims

1. A multifunctional air intake duct for a vehicle diesel engine equipped with an air intake line close to the filtration system of the fuel, **characterized in that** it is constituted, on the one hand, by a substantially cylindrical tubing (11), which has an air inlet (12) originating from the turbocompresssor and an air outlet (13) on the cylinder head of the engine, the said tubing (11) extending along a curvilinear axis ("X") to be substantially folded on itself, and, on the other hand, a substantially vertical protective wall (15), projecting from the upper outer surface of the tubing (11), which ensures a function of supporting and anti-shock protection of the fuel filter (20).

2. The multifunctional air intake duct according to Claim 1, **characterized in that** the upper outer surface (11A) of the tubing (11) forms, in cooperation with a substantially horizontal bottom wall, a channel permitting any leaks to be channelled and recovered which are liable to appear in the upper part of the fuel filter (20).

3. The multifunctional air intake duct according to any one of Claims 1 and 2, **characterized in that** the said tubing (11) comprises an inlet of redirected exhaust gases (19) or "EGR" gases.

4. The multifunctional air intake duct according to Claim 1, **characterized in that** the said protective wall (15) of the fuel filter (20) has the shape of a cylindrical sector, which substantially fits the peripheral outer surface of the fuel filter (20).

5. The multifunctional air intake duct according to any one of Claims 1 and 4, **characterized in that** the protective wall (15) comprises, at its upper part, two tapped holes (16, 17) intended to receive fixing screws (36, 37) of the fuel filter (20).

6. The multifunctional air intake duct according to Claim 5, **characterized in that** a third tapped hole (18) is provided on a radial extension (14) of the air outlet (13) of the tubing (11).

7. The multifunctional air intake duct according to any one of Claims 1 to 8, **characterized in that** the protective wall (15) is "one piece" with the tubing (11).

8. The multifunctional air intake duct according to Claim 7, **characterized in that** the protective wall (15) and the tubing (11) are made of metal, by the same casting operation.

9. The multifunctional air intake according to Claim 8, **characterized in that** the said metal is aluminium.

10. A vehicle, in particular a motor vehicle with a diesel engine, **characterized in that** it comprises an air intake duct for the supply of supercharged air of the engine in accordance with the multifunctional air intake duct of any one of the preceding claims.
